# EUROPEAN PATENT APPLICATION

(11) **EP 2 677 741 A1**
(43) Date of publication of application: **25.12.2013**
(21) Application number: 13172978.2
(22) Date of filing: 20.06.2013
(51) Int. Cl.: H04N 5/44, H04N 21/422

(54) **Remote control apparatus and control method thereof**

(30) Priority: 20.06.2012 KR 20120066375
(71) Applicant: Samsung Electronics Co., Ltd, Gyeonggi-do 443-742 (KR)
(72) Inventor: Choi, Eun-seok, Gyeonggi-do (KR); Lee, Woo-seok, Seoul (KR); Choi, Sang-on, Gyeonggi-do (KR); Hyun, Sang-min, Seoul (KR); Bae, Jun-won, Gyeonggi-do (KR)
(74) Representative: Venner Shipley LLP

(57) **Abstract**

A remote controlling apparatus to provide a plurality of control modes includes a communicating unit which performs communication with an external display apparatus which provides a user interface screen, a detecting unit which detects a movement of the remote controlling apparatus, a mode change button unit which receives a user command to change control mode, and a control unit which controls a display status of the user interface screen according to the movement of the remote controlling apparatus as detected through the detecting unit, and which operates in a pointing mode if the mode change button unit is released from pressed state, or operates in a gesture mode while the mode change button unit is in pressed state. The mode change button unit is arranged on a front surface of the remote controlling apparatus for a user to grip.

## Description

The present invention relates to remote controlling, and more particularly, to a remote control apparatus which detects a gesture and a control method thereof.

Advancement in the electronic technological field is enabling development of various ways of controlling electronic appliances. Conventionally, electronic apparatuses have been mainly controlled through buttons provided thereon or a remote controller which is separately provided.

However, the conventional way of controlling electronic apparatuses through a remote controller, separately from the electronic apparatus, has a shortcoming of user inconvenience because the user has to look at the buttons on the remote controller and press intended buttons to implement intended operation.

For example, in order to select specific content on an electronic apparatus screen using a pointer displayed thereon, the user has to select four directional buttons several times to move the pointer to intended content area. When the pointer is moved to the corresponding content area, the user then has to press a select button on the remote controller to instruct to select the specific content. Accordingly, user convenience is deteriorated, because the user is required to find and press buttons on the remote controller several times until he or she can finally select the intended content.

Accordingly, a method is desired, with which the user is enabled to surf through displayed information on the electronic apparatus screen at a remote distance with increased convenience.

Additional aspects and/or advantages will be set forth in part in the description which follows and, in part, will be apparent from the description, or may be learned by practice of the present invention.

According to an embodiment of the present invention, a technical objective is to provide a remote control apparatus for providing a plurality of control modes implementable in response to a detected gesture, and a control method thereof.

In an embodiment, a remote controlling apparatus for providing a plurality of control modes may include a communicating unit which performs communication with an external display apparatus which provides a user interface screen, a detecting unit which detects a movement of the remote controlling apparatus, a mode change button unit which receives a user command to change control mode, and a control unit which controls a display status of the user interface screen according to the movement of the remote controlling apparatus as detected through the detecting unit, and which operates in a pointing mode if the mode change button unit is released from pressed state, or operates in a gesture mode while the mode change button unit is in pressed state, wherein the mode change button unit is arranged on a rear surface of the remote controlling apparatus for a user to grip.

The pointing mode is to control a moving status of a pointer displayed on the user interface screen according to the movement status of the remote controlling apparatus as detected through the detecting unit, and the gesture mode is to control the display status of the user interface screen according to a preset gesture of the remote controlling apparatus.

The remote controlling apparatus may additionally include a select button unit which receives a user command to select an object on which the pointer is located in the pointing mode, and the select button unit may be arranged on a front surface of the remote controlling apparatus.

The remote controlling apparatus may additionally include a direction button unit arranged on an outer boundary of the select button unit, and the direction button unit may be implemented in a form that contains at least one of a touch sensor and an optical joystick utilizing optical technology.

The remote controlling apparatus may additionally include a touch input unit which includes a plurality of touch areas mapped with different functions, and the touch input unit may be arranged on a front surface of the remote controlling apparatus.

The different functions mapped with the plurality of touch areas may include at least one of a channel change function, a volume adjustment function, and a menu function, and the touch input unit may be arranged on a front surface of the remote controlling apparatus.

The detecting unit may include at least one of an accelerometer, a gyro sensor, and a terrestrial magnetism sensor.

The communicating unit may include a radio frequency (RF) communication module.

A rear surface of the remote controlling apparatus, on which the mode change button unit is arranged, may be rounded concavely.

The mode change button unit may be continuously arranged on a rear surface and both side surfaces of the remote controlling apparatus, and the both side surfaces of the remote controlling apparatus may be rounded concavely in continuation with the rear surface.

The remote controlling apparatus may include a plurality of the mode change button units.

An upper portion of the remote controlling apparatus where the select button unit is arranged, may be so formed as to be rounded to be gradually inclined downwardly toward a rear side

In an embodiment, a control method of a remote controlling apparatus for providing a plurality of control modes is provided, which may include operating in a pointing mode according to a moving status of the remote controlling apparatus, in which the pointing mode is to control a moving status of a pointer displayed on a user interface screen provided from an external display apparatus, detecting a pressed state of a mode change button unit which receives a user command to change a control mode, and operating in a gesture mode while the mode change button unit is in the pressed state, to control the display status of the user interface screen. The mode change button unit may be arranged on a rear surface of the remote controlling apparatus for a user to grip.

The control method may additionally include detecting the pressed state of a select button unit which receives a user command to select an object on which the pointer is located in the pointing mode, and if the select button unit is detected as being in the pressed state, transmitting a control signal to execute the object on which the pointer is placed, to the display apparatus.

The remote controlling apparatus may additionally include a direction button unit arranged on an outer boundary of the select button unit, wherein the direction button unit is implemented in a form that contains at least one of a touch sensor and an optical joystick utilizing optical technology.

The remote controlling apparatus may additionally include a touch input unit which includes a plurality of touch areas mapped with different functions, and the touch input unit may be arranged on a front surface of the remote controlling apparatus.

The remote controlling apparatus may communicate with the display apparatus based on radio frequency (RF) communication.

In an embodiment, a remote controlling apparatus for providing a plurality of control modes is provided, which may include a communicating unit which performs communication with an external display apparatus which provides a user interface screen, a detecting unit which detects a movement of the remote controlling apparatus, a mode change button unit which receives a user command to change control mode, a control unit which controls a display status of the user interface screen according to the movement of the remote controlling apparatus as detected through the detecting unit, and which operates in a pointing mode if the mode change button unit is released from pressed state, or operates in a gesture mode while the mode change button unit is in pressed state, and a select button unit which receives a user command to select an object on which the pointer is placed in the pointing mode. The mode change button unit may be arranged on a rear surface or on a rear surface and both side surfaces of the remote controlling apparatus, in which a rear surface and both side surfaces of the remote controlling apparatus are rounded concavely, and the select button unit may be arranged on an upper portion of the remote controlling apparatus and the upper portion of the remote controlling apparatus is so formed as to be gradually inclined downward to a rear direction.

As explained above, an intuitive way of remote controlling is provided, which provides a similar interfacing experience as provided by the touch input.

The above and/or other aspects of the present invention will be more apparent by describing certain exemplary embodiments of the present invention with reference to the accompanying drawings, in which:
FIG. 1 illustrates a display system according to an embodiment;
FIG. 2 is a view provided to explain operation of the display system of FIG. 1 according to an embodiment;
FIGS. 3A and 3B are block diagrams of a display apparatus according to an embodiment;
FIG. 4 is a view provided to explain a control unit 130 according to an embodiment;
FIG. 5 illustrates software structure of a storage unit 140 to support operation of a control unit 130 according to the above various embodiments;
FIG. 6 is a block diagram of a remote control apparatus according to an embodiment;
FIG. 7 is a detailed block diagram of the remote control apparatus of FIG. 6;
FIG. 8 is a block diagram provided to explain a form of signal processing algorithm according to an embodiment;
FIG. 9 illustrates an appearance of the remote control apparatus 200 of FIGS. 6 and 7;
FIG. 10 illustrates an example in which a plurality of mode change buttons 231 are provided on the remote control apparatus 200;
FIG. 11 is a view provided to explain a manner of operating a remote control apparatus according to various embodiments;
FIG. 12 is a view provided to explain an operational status in a pointing mode according to an embodiment;
FIG. 13 is a view provided to explain an operational status of mode change according to an embodiment;
FIG. 14 is a view provided to explain an operational status in a gesture mode according to an embodiment;
FIG. 15 is a view provided to explain an operational status in a gesture mode according to another embodiment;
FIG. 16 is a view provided to explain an operational status in a gesture mode according to another embodiment; and
FIG. 17 is a flowchart provided to explain a control method of a remote controlling apparatus according to an embodiment.

One or more exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present invention. Accordingly, it is apparent that the exemplary embodiments of the present invention can be carried out without those specifically defined matters. Also, well-known functions or constructions are not described in detail since they would obscure the invention with unnecessary detail.

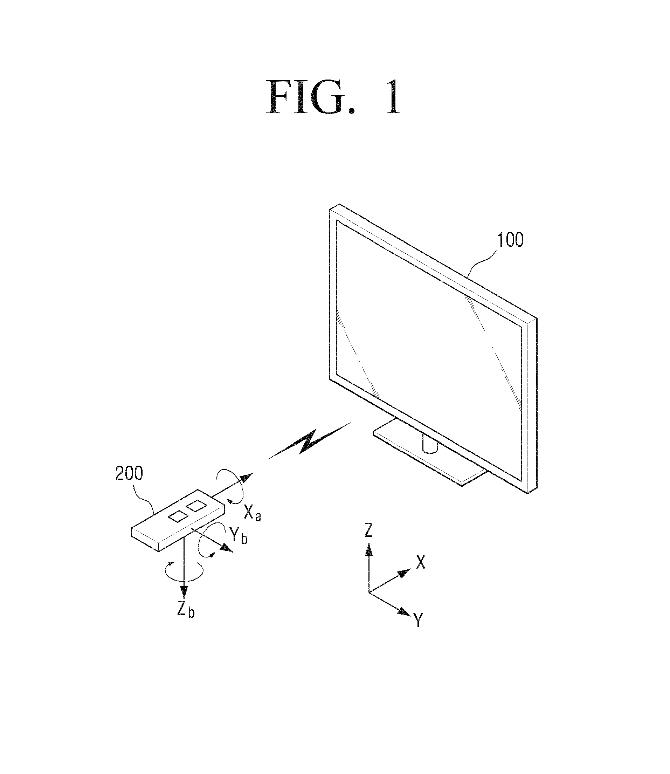

FIG. 1 is a view illustrating a display system according to an embodiment.

Referring to FIG. 1, a display system according to an embodiment may include a display apparatus 100 and a remote control apparatus 200.

The display apparatus 100 may be implemented as a digital TV which is controllable by the remote control apparatus 200 supporting a plurality of control modes, but not limited thereto. Accordingly, any device may be implemented as the display apparatus 100 provided that the device supports remote controlling.

The remote control apparatus 200 remotely controls the display apparatus 100, and may transmit a control signal to the display apparatus 100 according to a user command inputted thereto.

More specifically, the remote control apparatus 200 may detect a movement of the remote control apparatus 200 in a XYZ space, and transmit a signal regarding a detected three-dimensional (3D) movement to the display apparatus 100. As used herein, the '3D movement' may correspond to a command directing to control the display apparatus 100. That is, the user may transmit a preset command to the display apparatus 100 by moving the remote control apparatus 200 in the XYZ space.

Depending on whether the computation regarding detected information is performed at the display apparatus 100 or the remote control apparatus 200, the remote control apparatus 200 may transmit a signal ('control signal') corresponding to the detected movement information, or a signal ('control information') converted from a signal corresponding to the detected movement information into a control command to control the display apparatus 100. This will be explained in greater detail below.

The remote control apparatus 200 may provide a plurality of different control modes.

More specifically, the remote control apparatus 200 may move in a pointing mode and a gesture mode, for example. The remote control apparatus 200 in the pointing mode may control the movement of a pointer displayed on a user interface (UI) screen in accordance with the movement of the remote control apparatus 200, while the remote control apparatus 200 in the gesture mode may control display status of the UI screen in accordance with a preset gesture. The display status of the UI screen for controlling in the gesture mode may be distinguished from the pointing mode for controlling simple movement of the pointer. That is, the display status controlling in the gesture mode may be implemented as a screen change to a screen on which a specific function such as a menu display is executed, or a screen change such as a page change according to which different content is displayed on a screen.

The remote control apparatus 200 may provide the pointing mode based on absolute coordinates. That is, the area where the remote control apparatus 200 is moved may correspond to the screen of the display apparatus 100.

More specifically, a movement trajectory of the remote control apparatus 200 may be calculated with reference to a preset absolute reference point when the user moves the remote control apparatus 200. For example, if the remote control apparatus 200 moves in a space from (x1, y1 to (x2, y2), the pointer may move from (x3, y3) to (x4, y4) in accordance with the movement status of the remote control apparatus 200 on a screen. A distance between (x1, y1) and (x2, y2) and a distance between (x3, y3) and (x4, y4) may be different from each other depending on the corresponding ratio.

Further, the remote control apparatus 200 may include a mode change button which accepts a user command to change a control mode to provide a plurality of control modes. This will be explained in greater detail below.

The display apparatus 100 and the remote control apparatus 200 may perform communication based on a variety of communicating methods including Bluetooth (BT), Zigbee, Wireless Fidelity (WI-FI), Infrared (IR), Serial Interface, radio frequency (RF) communication or Universal Serial Bus (USB). For example, for Bluetooth communication, the display apparatus 100 and the remote control apparatus 200 may communicate with each other by Bluetooth pairing. Since the techniques related to the BT pairing is well known, thus will not be explained in detail. However, the present invention is not limited thereto. For example, any communicating method that enables the communication between the remote control apparatus 200 and the display apparatus 100 may be used.

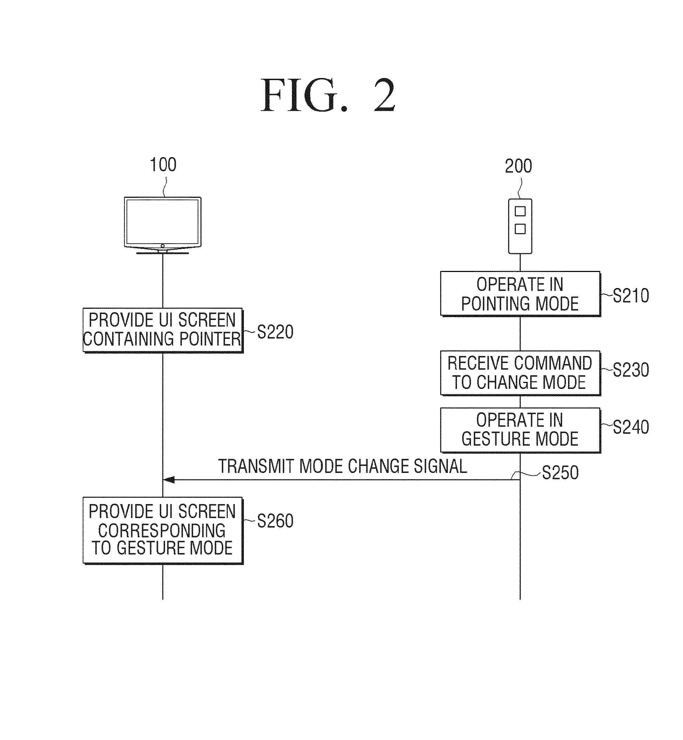

FIG. 2 is a view provided to explain an operation of the display system of FIG. 1.

Referring to FIG. 2, at S210, the remote control apparatus 200 may operate in pointing mode, while the display apparatus 100 at S220 may provide a UI screen including a pointer. The pointer displayed on the UI screen may function to point to at least one content, and may be provided in the form of a hand-shaped pointer, for example. However, the present invention is not limited thereto. The pointer may be any shape that a user may recognize as a pointer, for example, a palm-shaped pointer or an arrow pointer. Further, the pointer may blink in a predetermined interval to inform a user its location.

The pointer may move on the UI screen according to a direction and distance of the movement of the remote control apparatus 200. In the pointing mode, the absolute coordinates may be implemented.

At S230, if a mode change command is received through the remote control apparatus 200, at S240, the remote control apparatus 200 operates in the gesture mode.

Further, at S250, the remote control apparatus 200 transmits a mode change signal to the display apparatus 100.

In this case, at S260, the display apparatus 100 may provide a UI screen corresponding to the gesture mode. More specifically, the pointer currently displayed on the UI screen may be changed and displayed. For example, if the hand-shaped pointer is currently displayed on the UI screen, the current hand-shaped pointer may be changed into a palm-shaped pointer and displayed. A user may easily recognize a current mode by recognizing which pointer is displayed on the UI screen. Although not shown, a text may be displayed to inform the user which mode the remote control apparatus is currently operating or changed.

Further, the display apparatus 100 may display guide GUI to guide a gesture input with respect to the screen, along with the hand-shaped pointer. The guide GUI may be varied depending on the type of the UI screen. For example, the guide GUI may be provided in the form of an arrow which guides a direction of the gesture implementable on the current UI screen.

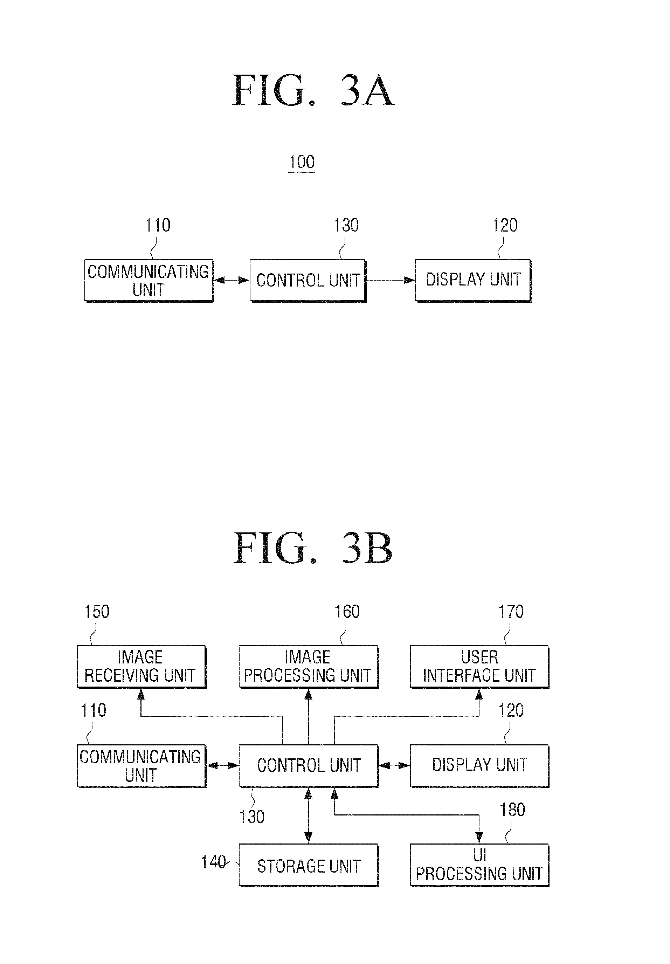

FIGS. 3A and 3B are block diagrams of a display apparatus according to an embodiment.

Referring to FIG. 3A, the display apparatus 100 may include a communicating unit 110, a display unit 120, and a control unit 130.

The display apparatus 100 may be implemented as a digital TV, tablet, PC or laptop computer, but not limited thereto. Accordingly, any device may be implemented as long as the device supports a display function and remote controlling.

The communicating unit 110 may communicate with the remote control apparatus 200. More specifically, the communicating unit 110 may perform communication with the remote control apparatus 200 by various communication methods such as Bluetooth (BT), Zigbee, Wireless Fidelity (WI-FI), Infrared (IR), Serial Interface, or Universal Serial Bus (USB). However, the present invention is not limited thereto. For example, any communication method that enables the communication between the remote control apparatus 200 and the display apparatus 100 may be used.

More specifically, the communicating unit 110 may receive a control signal corresponding to a user command which is inputted through the remote control apparatus 200. The 'user command' may be a gesture input, or additionally, button input, voice input, sound input, touch input, or others.

For example, a control signal corresponding to a detected gesture command may be received through the remote control apparatus 200. Depending on the circumstances, e.g., depending on a capacity of the remote control apparatus 200 to process computations, the control information may be received instead of the control signal.

Further, the communicating unit 110 may receive a control mode change signal, or select signal from the remote control apparatus 200. In this case, the control mode change signal, or the select signal may be inputted through a button portion provided on the remote control apparatus 200. However, any one of input methods, such as a gesture input, a voice input, sound input, or touch input, may be used.

Further, the communicating unit 110 may transmit information to the remote control apparatus 200 depending on an event or operation. For example, in an event of display apparatus 100 power-off, the remote control apparatus 200 may send out a power-off signal to automatically power-off the remote control apparatus 200.

The display unit 120 may provide various display screens that are supported by the display apparatus 100.

More specifically, the display unit 120 may display various UI screens capable of user interfacing.

Further, the display unit 120 may display a GUI corresponding to a control mode of the remote control apparatus 200 according to control of the control unit 130.

More specifically, if the remote control apparatus 200 is in pointing mode, the display unit 120 may display the pointer such as a cursor, a mouse cursor, or a highlighting, on the UI screen as displayed. Further, the display unit 120 may move the pointer according to a control signal received from the remote controlling apparatus 200 in the pointing mode and display the pointer at a changed location.

Further, if the remote controlling apparatus 200 is shifted to gesture mode from the pointing mode, the display unit 120 may display a guide GUI to guide the gesture input on the displayed UI screen. The guide GUI may be a cursor in an arrow form indicating a direction of the gesture, but not limited thereto.

The display unit 120 may be implemented as various types of displays such as, for example, a liquid crystal display, a thin film transistor-liquid crystal display, an organic light-emitting diode, a flexible display, or a 3D display.

The control unit 130 operates to control the overall operation of the display apparatus 100.

The control unit 130 may convert the control signal received from the remote controlling apparatus 200 into control information to control the display apparatus 100, and control the display apparatus 100 based on the converted control information. More specifically, the control unit 130 may convert the received control signal into control information form applicable to the function of the display apparatus 100 by using an information mapping table, and control the function of the display apparatus 100 using the converted control information.

The control unit 130 may particularly control the display apparatus 120 to provide a GUI in the form corresponding to the control mode of the remote controlling apparatus 200.

For example, when the UI screen is displayed on the display unit 120, the display apparatus 100 may basically operate in the pointing mode, displaying a corresponding GUI. Further, when the remote controlling apparatus 200 is operated in the gesture mode according to a user command, the control unit 130 may control the display unit 120 to display the corresponding GUI. As used herein, the "GUI" refers to an object to perform various indicating functions on the UI screen, and may be implemented in the form of a pointer, a cursor, or a mouse cursor, as mentioned above.

That is, if a mode change command is received from the remote controlling apparatus 200, directing to change the remote controlling apparatus 200 from the pointing mode into gesture mode, the object displayed on the screen may be displayed in changed form. For example, if the object displayed is a hand-shaped pointer, a pointing hand, i.e., a fist with an index pointing, may be displayed in the pointing mode, while a palm, i.e., all of the five fingers unfold, may be displayed in the gesture mode.

Further, the control unit 130 may change at least one of the object's shape, color, size, location and direction according to a manipulation that may be inputted on the UI screen provided in the gesture mode. For example, if a hand-shaped pointer is displayed as the object, and the screen zoom-in/out is enabled in the gesture mode, the hand-shaped pointer may be enlarged in the zoom-in state, while the hand-shaped pointer is reduced in size in the zoom-out state.

Further, if a mode change command is received from the remote controlling apparatus 200, directing to change the remote controlling apparatus 200 from the pointing mode to the gesture mode, the control unit 130 may control the display unit 120 to display a guide GUI in the form with orientation to guide gesture input through the remote controlling apparatus 200. For example, if left and right flicking is implementable in the gesture mode, a guide GUI with arrows pointing to left and right directions may be displayed.

Further, the control unit 130 may control the display unit 120 to change at least one of direction and distance of movement of the pointer displayed on the UI screen, according to at least one of the direction and distance of movement of the remote controlling apparatus 200 in the pointing mode, and to display the changed result. As explained above, the absolute coordinates may be used.

Further, if a gesture moving the remote controlling apparatus 200 in the X-Y plane corresponding to the plane of the screen of the display unit 120 is inputted in the gesture mode, i.e., in the direction parallel to the screen of the display unit 120, the control unit 130 may control the display unit 120 to change the UI screen into another UI screen systemically in the X-Y plane and to display the changed screen.

Further, if a gesture moving the remote controlling apparatus in the Z direction which is perpendicular to the screen of the display unit 120, the control unit 130 may control so that the content selected on the UI screen is zoomed-in or out and displayed.

FIG. 3B is a detailed block diagram of the display apparatus of FIG. 3A.

Referring to FIG. 3B, the display apparatus 100 includes a communicating unit 110, a display unit 120, a control unit 130, a storage unit 140, an image receiving unit 150, an image processing unit 160, a user interface unit 170, and a UI processing unit 180. An example where the display apparatus 100 of FIG. 3A is implemented as a digital TV will be explained below. However, as discussed above, the present invention is not limited to a digital TV. Throughout the description of an embodiment with reference to FIG. 3B, the like elements as those of FIG. 3A will be omitted for the brevity.

The storage unit 140 is a recording medium which stores various data and programs necessary for the operation of the display apparatus 100. The storage unit 140 may be implemented as a memory, or a hard disk drive (HDD).

The storage unit 140 may particularly store the control information which corresponds to the control signal received from the remote controlling apparatus 200. That is, the storage unit 140 may store the control information corresponding to the control signal received from the remote controlling apparatus 200 in a tabulated form. For example, in response to a control signal corresponding to a gesture of flicking from left to right received from the remote controlling apparatus 200, the storage unit 140 may match and store a command to change UI screen. In response to a control signal corresponding to a gesture of moving up and down, the storage unit 140 may match and store a content zoom-in/out command.

The image receiving unit 150 may receive a broadcast content from an antenna or cable, or receive image content from an external device or external communication network.

That is, the image receiving unit 150 may receive various image contents from a network or over the air. As used herein, the 'content' refers to pre-made content such as VOD, broadcast content or the like.

The image receiving unit 150 may be implemented in various forms. For example, if the display apparatus 100 is implemented as a digital TV, the image receiving unit 110 may be implemented as a set-top box, a tuner, an external input port, or a network communication module.

The image processing unit 160 operates to process various signals received via the image receiving unit 150. Accordingly, the image processing unit 160 may include signal processing components such as a demodulator, a decoder, an A/D converter, or a scaler.

The user interface unit 170 may be implemented in various forms depending on the types of the display apparatus 100. For example, if the display apparatus 100 is a digital TV, the user interface unit 170 may be implemented as a communicating unit 110 to receive a remote control signal.

The user interface unit 170 may be implemented as an input panel which includes a plurality of keys, or a touch screen of an inter-layered structure of a display and a touch pad.

The UI processing unit 180 under control of the control unit 130 operates to generate various UI components to be overlappingly displayed on an image outputted through the display unit 120. The UI processing unit (not illustrated) may generate 2D or 3D UI components.

Further, the UI processing unit 180 under control of the control unit 130 may perform operations such as 2D/3D conversion of UI component, adjustment of transparency, color, size, shape, or location, or highlighting or animation effect.

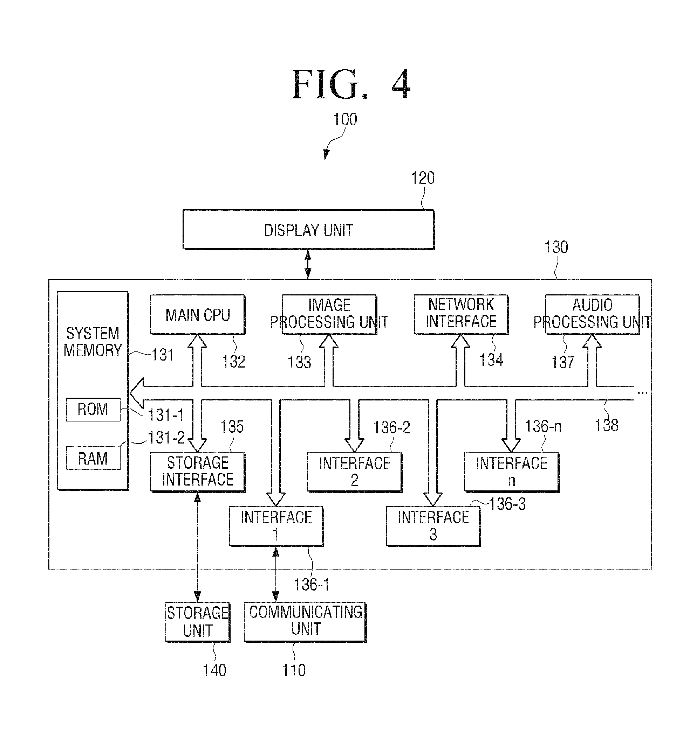

FIG. 4 illustrates the control unit 130 according to an embodiment.

Referring to FIG. 4, the control unit 130 may include a system memory 131, a main CPU 132, an image processing unit 133, a network interface 134, a storage unit interface 135, interfaces 1 to n (136-1 ∼ 136-n), an audio processing unit 137, and a system bus 138.

The system memory, the main CPU 132, the image processor 133, the network interface 134, the storage interface 135, the interfaces (136-1 ∼ 136-n), and the audio processing unit 137 may be connected to each other via the system bus 138 to transmit and receive various data and signals.

The interfaces 1 to n (136-1 ∼ 136-n) support interfacing among various components including the display unit 120 with the components within the control unit 130. At least one of the interfaces 1 to n (136-1 ∼ 136-n) may be implemented as an input interface to receive various signals from the button formed on a main body of the display apparatus 100, or from an external device connected to the external input ports 1 to n.

The system memory 151 includes a ROM 131-1 and RAM 131-2. The ROM 131-1 stores command language set for system booting. If a turn-on command is inputted and electricity is supplied, the main CPU 132 copies the stored O/S of the storage unit 140 onto the RAM 131-2 according to a command stored in the ROM 131-1, and boots the system by executing the O/S. When booting is completed, the main CPU 132 copies various application programs stored in the storage unit 140 onto the RAM 131-2, and performs various operations by executing the application programs copied onto the RAM 131-2.

As explained above, the main CPU 132 may perform various operations according to the stored application programs of the storage unit 140 as these are executed.

The storage unit interface 135 is connected to the storage unit 140 to transmit and receive various programs, contents, or data.

For example, if a control signal is received from the remote controlling apparatus 200, the main CPU 132 may access the storage unit 140 through the storage unit interface 135, read out the control information mapped in the control signal, and then control the operation of the display apparatus 100 using the read control information.

The image processing unit 133 may include a decoder, a renderer, or a scaler. Accordingly, the image processing unit 133 decodes the stored content, constructs a frame by rendering the decoded content data, and scales the size of the constructed frame to fit the screen size of the display unit 120. The image processing unit 133 provides the processed frame to the display unit 120 to display the same.

Additionally, the audio processing unit 137 refers to a component which processes audio data and provides the resultant data to a sound output components such as a speaker (not illustrated). The audio processing unit 137 may perform audio signal processing such as decoding the audio data stored in the storage unit 140 or the audio data received from outside, filtering noise or amplifying to appropriate decibel. In the example explained above, if video content is currently played back, the audio processing unit 137 may process the de-MUXed audio data from the video content to provide the same to the speaker (not illustrated) so that the content is outputted in synchronization with the image processing unit 133.

The network interface 134 is connected to the external devices via network. For example, if an application for providing an information-providing service according to an embodiment is driven, the main CPU 132 may communicate with the remote controlling apparatus 200 via the network interface 134.

The operation of the control unit 130 may be implemented by executing various programs stored in the storage unit 140.

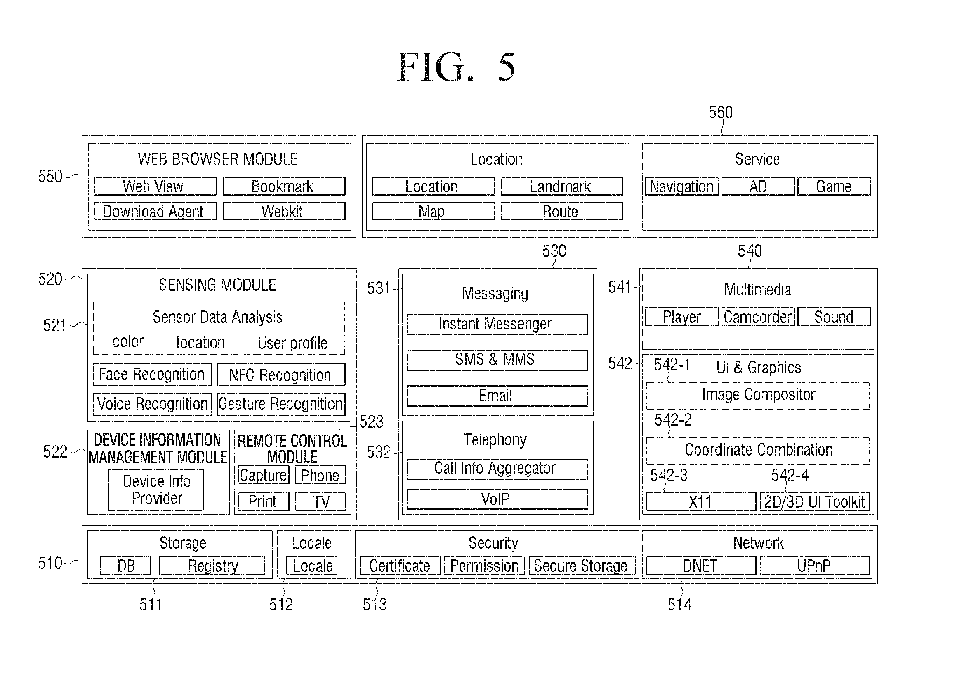

FIG. 5 illustrates the software structure of the storage unit 140 to support the operation of the control unit 130 according to various embodiments. Referring to FIG. 5, the storage unit 140 includes a base module 510, a device management module 520, a communication module 530, a presentation module 540, a web browser module 550 and a service module 560.

The base module 510 processes the signals transmitted from the respective hardware included in the display apparatus 100 and transmit the processed signal to the upper layer modules.

The base module 510 includes a storage module 511, a location based module 512, a security module 513, and a network module 514.

The storage module 511 is a program module which manages database DB or registry. The location based module 512 is a program module which supports location based service in association with the hardware such as GPS chip. The security module 513 is a program module which supports hardware certification, requesting permission, secure storage, or the like, and the network module 514 supports network connections, and includes DNET module or UPnP module. For example, networking with an external server (not illustrated) may be implemented through the network module 514.

The device management module 520 manages and uses external input and information regarding an external device. The device management module 520 includes a sensing module 521, a device information management module 522, or a remote control module 523. For example, information regarding the remote controlling apparatus 200 may be managed through the device management module 520.

The sensing module 521 analyzes various sensor data. For example, the sensing module 521 may include a facial recognition module, a voice recognition module, a gesture recognition module, a motion recognition module, a NFC recognition module, or the like.

The device information management module 522 provides information about various devices, and the remote control module 523 is a program module which performs remote control operation on peripheral devices such as telephone, printer, camera, or air conditioner.

The communication module 530 implements communication with outside. The communication module 530 may include a messaging module 531 such as a messenger program, a Short Message Service (SMS) & Multimedia Message Service (MMS) program, or an email program, or a telephone module 532 including a call info aggregator program module, or a VoIP module.

The presentation module 540 constructs a display screen. The presentation module 540 may include a multimedia module 541 which plays back multimedia content and outputs the same, and a UI & graphic module 542 which performs UI and graphic processing. The multimedia module 541 may include a player module, a camcorder module, or a sound processing module. Accordingly, various multimedia contents are played back so that screen and sound are generated and played back. The UI & graphic module 542 may include an image compositor module 542-1 which combines images, a coordinate combination module 542-2 which combines coordinates on a screen to display the image, a XII module 542-3 which receives various events from the hardware, or a 2D/3D UI toolkit 542-4 which provides tools to construct 2D or 3D UI. For example, it is possible to construct a UI screen corresponding to pointing or gesture mode through the presentation module 540.

The web browser module 550 refers to a module which accesses the web server by implementing web browsing. The web browser module 550 may include various modules such as, for example, a web view module which constructs web page, a download agent module which performs downloading, a bookmark module, or a webkit module.

Additionally, the service module 560 refers to an application module to provide various services. For example, the service module 560 may include various modules such as a navigation service module which provides map, current location, landmark, or route information, a game module, an ad application module, or the like.

The main CPU 132 within the control unit 130 accesses the storage unit 140 through the storage unit interface 135, copies various stored modules of the storage unit 140 onto the RAM 131-2, and performs operations according to the operations of the copied modules.

For example, to display GUI in the pointing or gesture mode, the main CPU 132 constructs a GUI screen using the image combination module 542-1 within the presentation module 540. The main CPU 132 then determines a location to display the GUI screen using the coordinate combination module 542-2 and controls the display unit 120 to display the GUI at the location.

If a user manipulation corresponding to the message reception is inputted, the main CPU 132 accesses the message management server by executing the messaging module 541 and receives the message stored at a user account. The main CPU 132 then constructs a screen corresponding to the received message using the presentation module 540 and displays the result on the display unit 120.

The main CPU 132 may drive the telephone module 532 to implement telephone call operation.

As explained above, the storage unit 140 may store programs of various structures, and the control unit 130 may perform operations according to embodiments explained above using various programs stored at the storage unit 140.

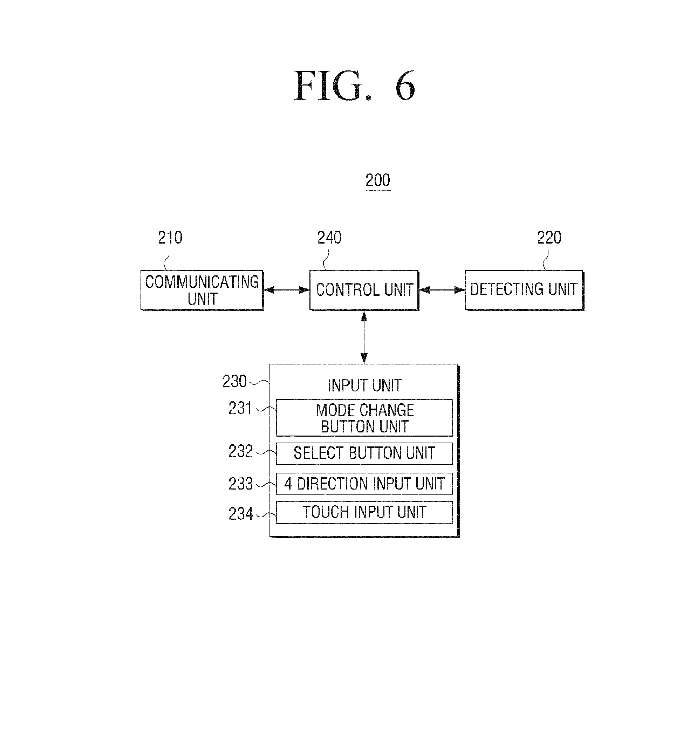

FIG. 6 is a block diagram of a remote controlling apparatus according to an embodiment.

Referring to FIG. 6, the remote controlling apparatus 200 may include a communicating unit 210, a detecting unit 220, an input unit 230, and a control unit 240.

The communicating unit 210 may performs communication with the display apparatus 100, and transmit a detection signal obtained through the detecting unit 220 and a signal corresponding to a user command inputted through the input unit 230 to the display apparatus 100. That is, the communicating unit 210 may communicate with the display apparatus 100 by various communication methods such as Bluetooth (BT), Zigbee, Wireless Fidelity (WI-FI), Infrared (IR), Serial Interface, Universal Serial Bus (USB), or Near Field Communication (NFC). The communicating unit may include a radio frequency (RF) communication module. However, the present invention is not limited thereto. For example, any communication method that enables the communication between the remote control apparatus 200 and the display apparatus 100 may be used.

The detecting unit 220 detects 3D movement of the remote controlling apparatus 200. More specifically, the detecting unit 220 may include at least one of accelerometer, gyro sensor, and terrestrial magnetism sensor. The detecting unit 220 may detect the 3D movement of the remote controlling apparatus 200 by one, or a combination of two or more of the sensors.

The accelerometer measures spatial movement of the remote controlling apparatus 200. Accordingly, the accelerometer may detect at least one of variation in linear acceleration and variation in angular acceleration which generate when the user moves the remote controlling apparatus 200. The accelerometer may be implemented as a three-axis accelerometer to measure increase/decrease in the linear speed with respect to three axes in perpendicular relations with each other. Accordingly, through the accelerometer, information regarding tilting of the remote controlling apparatus 200 may be acquired, by using acceleration-related information of the remote controlling apparatus 200 and gravity acceleration component in non-moving state.

The gyro sensor measures rotational angular velocity of the remote controlling apparatus 200. That is, the gyro sensor perceives direction and velocity of rotation, by using the inertial force of a rotating object. The gyro sensor may be implemented as a three-axis angular speed sensor which measures increase/decrease of rotational angle with respect to three axes in perpendicular relations with each other.

The terrestrial magnetism sensor measures azimuth. That is, the terrestrial magnetism sensor 106 measures azimuth angle by detecting a magnetic field formed in south-north direction of the earth. The terrestrial magnetism sensor may be a three -axis terrestrial sensor which measures magnitude and direction of magnetic force with respect to three axes in perpendicular relation with each other. The northern direction measured by the terrestrial magnetism sensor may be the magnetic north. However, even when the terrestrial magnetism sensor measures the magnetic northern direction, a true northern direction may be outputted after internal computations.

The detecting unit 220 may additionally and optionally include a distance sensor. The distance sensor measures a distance between the remote controlling apparatus 200 and the display apparatus 100. Accordingly, the user is able to detect a distance between the remote controlling apparatus 200 and the display apparatus 100.

The input unit 230 receives user commands.

That is, the input unit 230 includes a mode change button unit 231, a select button unit 232, a direction input unit 233 and a touch input unit 234.

The mode change button unit 231 may receive a user command to change control mode.

The mode change button unit 231 may particularly receive a user command directing to change from the pointing mode to the gesture mode. For example, the remote controlling apparatus 200 may operate in the gesture mode while the mode change button unit 231 is in pressed state, and operate in the pointing mode when the mode change button unit 231 is released from the pressed state. The mode change button unit 231 may be implemented in the form of a hardware button.

The select button unit 232 may receive a selection command.

The select button unit 232 may particularly receive a user command directing to select an object on which the pointer is displayed on the screen of the display apparatus 100 in the pointing mode. That is, if the select button unit 232 is pressed in a state that the pointer displayed on the screen of the display apparatus 100 is located on a specific content, the corresponding object is selected and the corresponding function may be implemented. For example, if the corresponding content is an icon interface of a specific application, the corresponding application execute screen may be displayed.

Further, the select button unit 232 may perform the function of an enter key, or a confirm key, depending on the characteristic of the UI as provided.

The direction input unit 233 is arranged on an outer boundary of the select button unit 232, and receives a user command to operate in a plurality of directions. The plurality of directions may include four directions which are up, down, left and right directions, or eight directions, up, upper-left, upper-right, down, down-left, down-right, left and right directions, for example.

The select button unit 232 and the direction input unit 233 may be implemented to include at least one of a touch sensor and an optical joystick utilizing optical technology.

The touch input unit 234 may be implemented in a form which includes a plurality of touch areas with which different functions are mapped. That is, the touch input unit 234 may include a plurality of touch areas mapped with different functions including channel change function, volume adjustment function, or menu function.

The control unit 240 operates to control the overall operation of the remote controlling apparatus 200. For example, the control unit 240 may be implemented as a central processing unit (CPU) or microcontroller unit (MCU).

The control unit 240 may particularly control so that the remote controlling apparatus 200 may be changed to the gesture mode, if a mode change command is inputted through the input unit 230 in a state that the remote controlling apparatus 200 is in pointing mode. Further, the control unit 240 may transmit a signal corresponding to mode change to the display apparatus 100 so that the display apparatus 100 provides a UI screen corresponding to the changed mode.

More specifically, in a state that the mode change button unit 231 of the input unit 230 is pressed, the control unit 240 perceives a movement of the remote controlling apparatus 200 in the gesture mode, and accordingly send out a corresponding signal to the display apparatus 100. For example, the control unit 240 may analyze the sensor value obtained from the detecting unit 220 through a signal processing algorithm and transmit the control information corresponding to the analyzed gesture to the display apparatus 100 so that the display apparatus 100 controls the screen display status. The control unit 240 may also send the sensor value obtained from the detecting unit 220 to the display apparatus 100, in which case the display apparatus 100 may analyze the received sensor value through a gesture recognition algorithm and control the screen display status based on the control information corresponding to the analyzed gesture.

Further, if the mode change button unit 231 of the input unit 230 is released from being pressed, the control unit 240 perceives the movement of the remote controlling apparatus 200 as a movement made in the pointing mode, and transmits a corresponding signal to the display apparatus 100. For example, the control unit 240 may analyze the sensor value obtained from the detecting unit 220 through a signal processing algorithm, calculate absolute coordinate values to control a location of the pointer, and transmit the calculated absolute coordinate values to the display apparatus 100 to control the moving status of the pointer. The control unit 240 may also transmit the sensor value obtained at the detecting unit 220 to the display apparatus 100, in which case the display apparatus 100 may calculate the absolute coordinate values based on the received sensor value and control the moving status of the pointer using the calculated absolute coordinate values.

Further, if the select button unit 232 is selected, the control unit 240 may transmit a corresponding signal to the display apparatus 100 so that the content, on which the pointer is placed when the select button unit 232 is selected, is selected on the display apparatus 100.

Meanwhile, at least one of the mode change button unit 231 and the select button unit 232 may be implemented as a touch pad or a touch screen, in which case the remote controlling apparatus 100 may include a touch sensor to detect a user's touch input. However, an embodiment is not limited to the specific example mentioned above, and accordingly, at least one of the first and second button units may be implemented as a physical button.

Further, at least one of the mode change button unit 231 and the select button unit 232 may be implemented in a form of an optical joystick (OJ) which utilizes optical technology.

As explained above, the input unit 230 may be implemented in a form of touch pad, physical button or OJ, or a combination of at least two of these.

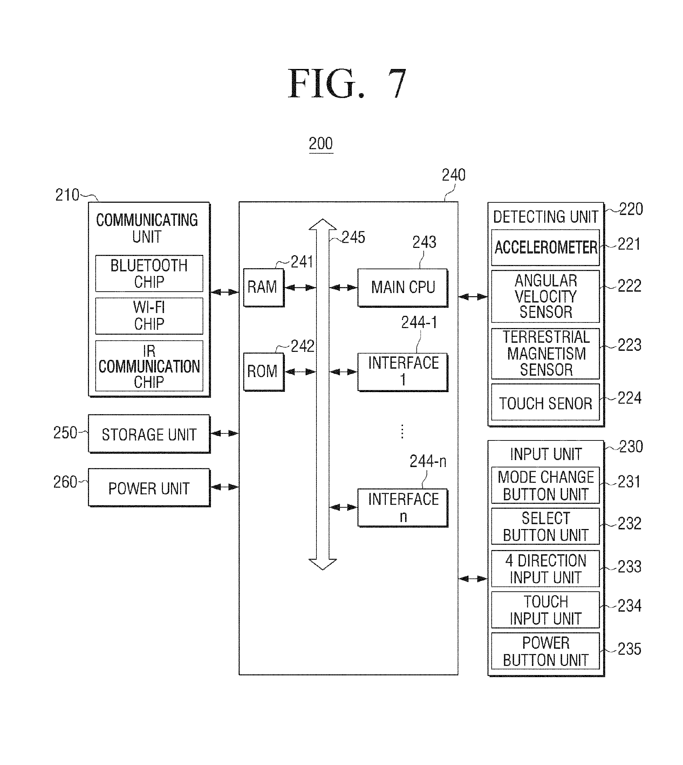

FIG. 7 is a detailed block diagram of the remote controlling apparatus of FIG. 6.

The communicating unit 210 may include hardware according to various communication methods such as Bluetooth chip, Wi-Fi chip, or IR communication chip. These chips may be integrated as one chip, or referring to FIG. 7, may be used as separate chips. Further, the communicating unit may include a radio frequency (RF) communication module.

The Bluetooth chip, Wi-Fi chip, and IR communication chip perform communication by Bluetooth technology, Wi-Fi technology and IR technology, respectively. Among these, the communication using Bluetooth chip or Wi-Fi chip may transmit or receive various connection information in advance, to be able to transmit and receive various information after communication connection is made.

In another embodiment, various mobile communication technologies may be implemented using a mobile communication network such as 3G or 4G, or the internet.

The communicating unit 210 may communicate with various external devices including the display apparatus 100 using these chips of various constitutions. The communicating unit 210 may particularly transmit various control signals or control information explained above to the display apparatus 100.

The detecting unit 220 operates to sense a movement of the remote controlling apparatus 200. The detecting unit 220 may include a variety of sensors including an accelerometer 221, an angular velocity sensor, a terrestrial magnetism sensor 223 or a touch sensor 224.

The accelerometer 221 measures an acceleration and a direction of the acceleration, when a movement occurs. More specifically, the accelerometer 221 outputs a sensing value corresponding to an acceleration of the movement of the remote controlling apparatus 200 on which the accelerometer 221 is attached, and a sensing value corresponding to an acceleration of gravity which varies depending on a tilting of the remote controlling apparatus 200. Based on the output values from the accelerometer 221, the control unit 240 may determine a tilting degree using the acceleration of the movement of the remote controlling apparatus 200 and the acceleration of gravity component of the remote controlling apparatus 200 in still state.

If a rotating movement occurs, the angular velocity sensor 222 measures the Coriolis' force acting in a direction of the velocity, to thus detect angular velocity. The control unit 240 may also detect the rotation of the remote controlling apparatus 200 by using the value measured at the angular velocity sensor 222.

The terrestrial magnetism sensor 223 detects magnetism of the earth or magnetism of neighboring magnetic objects, using 2- or 3-axis fluxgate. The control unit 240 may measure the direction and magnitude of magnetism using the terrestrial magnetism value detected at the terrestrial magnetism sensor 223, and may calculate azimuth angle based on this. Accordingly, it is possible to determine to which direction the remote controlling apparatus 200 is rotated.

The touch sensor 224 may detect the user's touch input. The touch sensor 224 may be implemented in a capacitive or resistive manner. The capacitive touch sensor uses a dielectric material coated on the surface of the remote controlling apparatus 200 so that in response to a user touching on the surface of the remote controlling apparatus 200, the capacitive touch sensors detects minute electricity excited by the user's body and calculates touch coordinates. The resistive touch sensor includes two electrode plates included in the remote controlling apparatus 200 so that in response to the user's touching, the plates above and below the touched point detect a flow of electricity to thus calculate touch coordinates. Other detection methods using IR detection, surface acoustic wave, integral strain gauge, or piezo electric effect may be utilized to detect the touch input, and these will not be explained in detail for the sake of brevity.

The control unit 240 may perform various computation according to the sensing signals provided from the detecting unit 220. For example, if the accelerometer 221, the angular velocity sensor 222 and the terrestrial magnetism sensor 223 sense a movement of the remote controlling apparatus 200, the control unit 240 may control so that the corresponding detect signal is computed according to a signal processing algorithm and the result of the computation is transmitted to the display apparatus 100.

The input unit 230 may include a mode change button unit 231, a select button unit 232, a direction input unit 233, a touch input unit 234 and a power button unit 235.

The mode change button unit 231, the select button unit 232, the direction input unit 233 and the touch input unit 234 have been explained above, and thus will not be explained repeatedly.

The power button unit 235 operates to receive a user command to turn ON/OFF a power unit 260.

The operation of the control unit 240 may be implemented according to the program stored at a storage unit (not illustrated).

That is, the storage unit 250 may store operating system (O/S) software to drive the remote controlling apparatus 200 and various data including signal processing algorithm to compute the signal detected at the detecting unit 220. The control unit 240 may control the overall operation of the remote controlling apparatus 200 using the various programs stored at the storage unit 250.

More specifically, the control unit 240 may include a RAM 241, a ROM 242, a main CPU 243, interfaces 1 to n (244-1 ∼ 244-n), and a bus 245.

The RAM 241, the ROM 242, the main CPU 243, and the interfaces 1 to n (244-1 ∼ 244-n) may be connected to each other via the bus 245 to transmit and receive various data or signals.

The interfaces 1 to n (244-1 ∼ 244-n) may be connected to not only the components illustrated in FIG. 7, but also other components to allow access of the main CPU 243 thereto.

The main CPU 243 accesses the storage unit 250 and performs booting using the O/S stored at the storage unit 250. The main CPU 243 may perform various operations using the various programs or data stored at the storage unit 250.

That is, the ROM 242 stores a command language set for the system booting. If power is supplied according to turn-on command, the main CPU 243, according to the command stored at the ROM 242, copies the stored O/S of the storage unit 250 onto the RAM 241 and boots the system by executing the O/S. When booting is completed, the main CPU 243 copies the various programs stored at the storage unit 250 onto the RAM 241 and performs various operations by executing the programs copied onto the RAM 241.

As explained above, the control unit 240 may copy the stored programs of the storage unit 250 onto the RAM 241 and execute various operations.

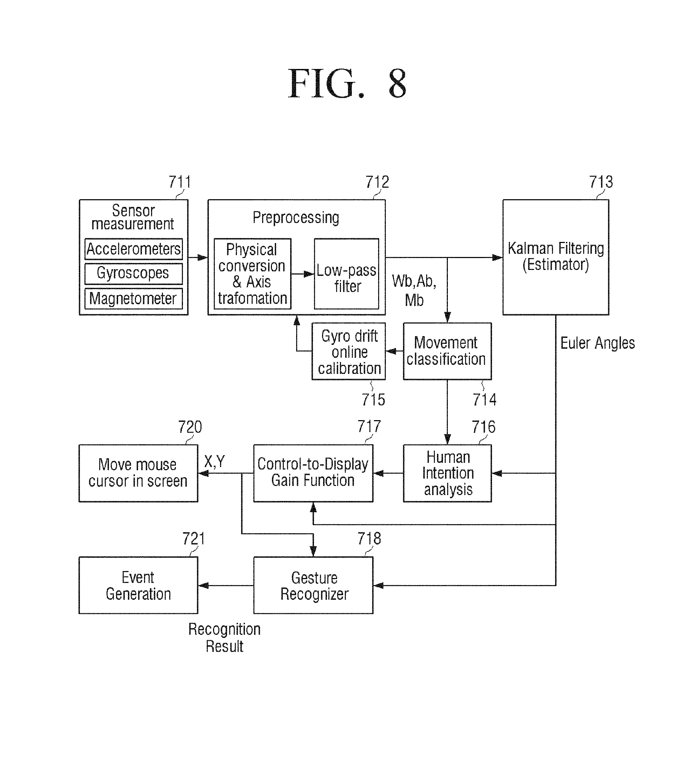

FIG. 8 is a block diagram provided to explain a form of the signal processing algorithm according to an embodiment.

Referring to FIG. 8, the signal processing algorithm may include a sensor measurement block (711) to receive sensor measurement, a preprocessing block (712), an attitude or "pose" estimating block (713), a movement classification block (714), a calibration implementing block (715), a human intention analysis block (716), a gain function application block (717), a gesture recognition block (718), a cursor movement block (720) and an event generation block (721). The signal processing algorithm illustrated in FIG. 7 is implementable on the CPU or MCU.

The sensor measurement block (711) receives various sensor values obtained at the detecting unit 220. For example, the sensor measurement block (711) may receive sensor values obtained through at least one of the accelerometer, angular velocity sensor, gyro sensor, touch sensor and terrestrial magnetism sensors.

The preprocessing block (712) preprocesses the received sensor value, and more specifically, performs conversion of physical parameters regarding the sensor value, conversion of sensor axis, or low-pass filtering.

For example, a sensor value after digitization may be converted into an actual physical parameter which may be implemented in the signal processing algorithm (physical parameter conversion). Further, the respective individual axes of the accelerometer, the angular velocity sensor and the terrestrial magnetism sensor may be aligned to one defined axis (sensor axis conversion). Further, electric noise and unintended high frequency movement may be removed through the low-pass filtering.

The pose eliminating block (713) estimates attitude or "pose" or eular angle (roll, pitch and yaw (heading)) from the respective sensor values. The Kalman Filter-based estimation may be used.

The movement classification block (714) classifies the movement status using a sensor signal, by determining whether the remote controlling apparatus 200 is in still state, or moves slowly or fast.

The calibration implementing block (715) performs calibration, and if the movement classification block (714) determines zero-rate, i.e., that the remote controlling apparatus 200 is in still state, the calibration implementing block (715) obtains an average of the output values of the angular velocity sensor and subtracts the average from the output values of the angular velocity sensor to compensate form the offset of the angular velocity sensor.

The human intention analysis block (716) analyzes and determines whether the user intends to move the remote controlling apparatus 200 or stop the same, or which is intended to be clicked by the user.

The gain function application block (717) converts the yaw angle and pitch angle outputted from the pose eliminating block (713) into X and Y coordinates of the display apparatus 100. The location of the mouse cursor is determined using the converted coordinates.

The gesture recognition block (718) may perform gesture recognition based on a designated gesture by using a signal outputted from the preprocessing block (712).

After that, the coordinates X, Y outputted from the gain function application block (717) may be mapped with the coordinates X, Y on the UI screen of the display apparatus 100 to designate the coordinates of the pointer.

Further, the cursor movement block (720) may perform a movement of the cursor, for example, a mouse cursor, based on the location of the mouse cursor determined using the converted coordinates from the gain function application block (717), and the event generation block (721) may generates a preset event generated on the UI screen so that a corresponding operation may be performed, using the Euler angles (roll, pitch and yaw) outputted from the gesture recognition block (718), or the coordinates X, Y outputted from the gain function application block (717).

The computation according to the signal processing algorithm may be processed at the control unit 240 of the remote controlling apparatus 200 or at the control unit 130 of the display apparatus 100.

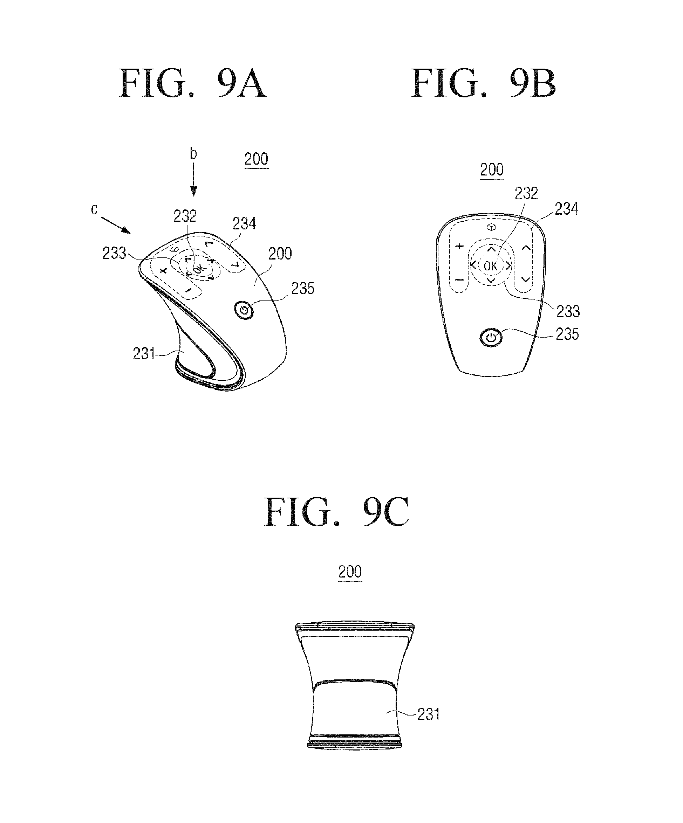

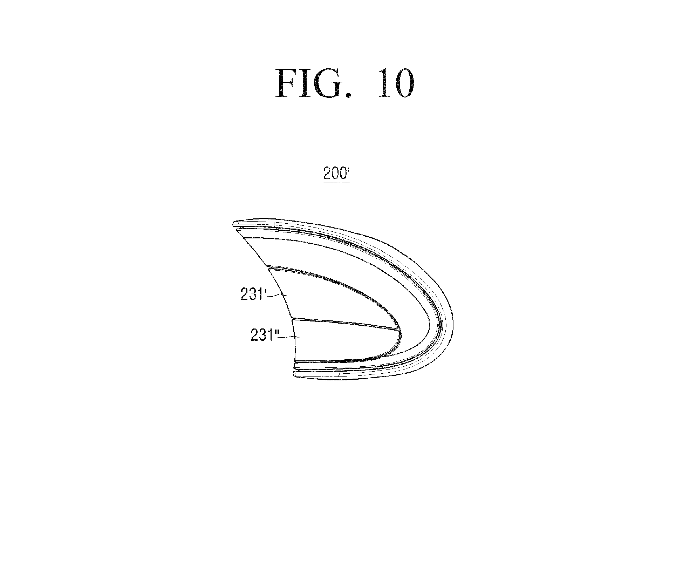

FIG. 9 illustrates an appearance of the remote controlling apparatus 200 of FIGS. 6 and 7, in which FIG. 9A is a perspective view of the remote controlling apparatus 200, FIG. 9B are viewed from a direction "b" of FIG. 9A, and FIG. 9C is viewed from a direction "c" of FIG. 9A. FIG. 10 illustrates an example where the remote controlling apparatus 200 includes a plurality of mode change button units 231.

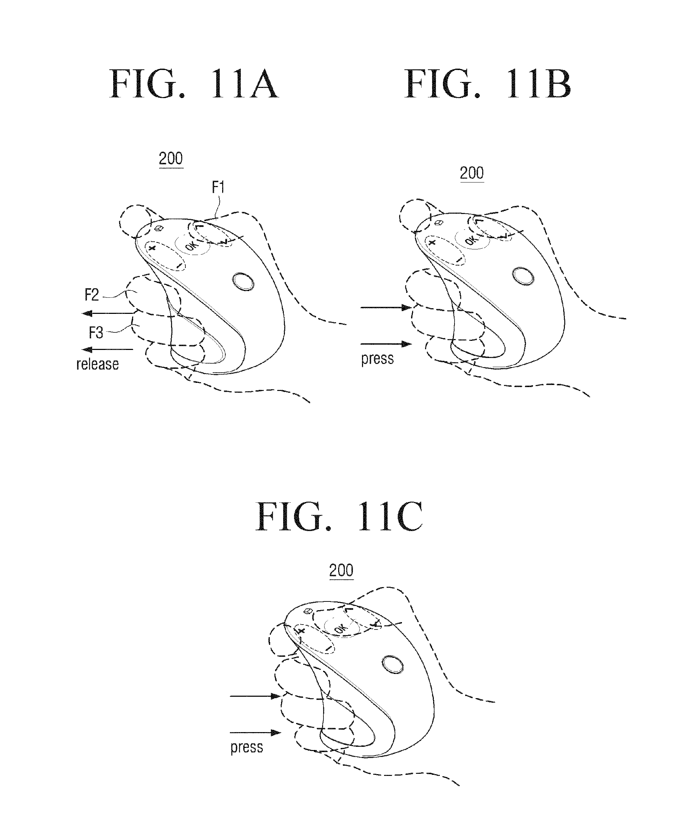

Referring to FIG. 9A, in consideration of the shape of a hand when it is closed gently to grab or hold an object, the remote controlling apparatus 200 may be so formed that a front surface has an upper portion which is downwardly inclined with a gradually decreasing curvature toward a rear portion to minimize the possibility that a user has fatigue in using the remote controlling apparatus 200. The upper front surface protrudes further than the lower front side. The terms "front" and "rear" respectively refer to the surfaces facing the user's thumb (F1) and towards the user's fingers (F2, F3), when the user is holding the remote controlling apparatus in the configuration shown in Figures 11A**,** 11B and 11C.

Referring to FIG. 9C, to provide improved feeling when grasping the remote controlling apparatus 200, the rear surface, and left/right sides are rounded concavely. Accordingly, the user may rest his or her hand comfortably on the remote controlling apparatus 200, without straining hand or wrist.

The remote controlling apparatus 200 is so formed that when the user grasps the remote controlling apparatus 200 with his or her hand, the middle finger (F2) and ring finger (F3) rest on the mode change button unit 231 on the rear or on rear and both sides of the remote controlling apparatus 200, while the thumb (F1) rests on the select button unit 232 on the upper or a front portion of the upper portion of the remote controlling apparatus 200 (see FIG. 11).

As explained above, the mode change button unit 231 and the select button unit 232 may be so arranged in consideration of the locations of the fingers (F1-F3) to enable a user to naturally press the mode change button unit 231 and the select button unit 232 while grasping the remote controlling apparatus 200 in his or her hand.

In an embodiment, although the mode change button unit 231 may be integrally formed, this is only one of various examples. Accordingly, referring to FIG. 10, the remote controlling apparatus 200' may have a plurality of mode change button units 231', 231". In this case, the mode change button units 231', 231" may be arranged one above the other to enable the user to manipulate the plurality of mode change button units 231', 231" with his or her middle and ring fingers.

Further, if the plurality of mode change button units 231', 231' are provided, the mode change button units 231', 231" may be operated singularly or collectively to thus generate different predetermined signals.

The direction input unit 233 and the touch input unit 234 may be formed on the upper portion of the remote controlling apparatus 200, and may be arranged so that the direction input unit 233 surrounds the select button unit 232, and the touch input unit 234 surrounds the select button unit 232. That is, the select button unit 232 may be placed at an innermost location, and the direction input unit 233 and the touch input unit 234 may be arranged in order from the select button unit 232 to an outward direction.

The direction input unit 233 and the touch input unit 234 are so formed as to facilitate the movement of the thumb so that the thumb moves relatively freer than the rest of the fingers while the user is grasping the remote controlling apparatus 200.

Referring to FIG. 9B, the touch input unit 234 may have different portions thereof correspond to different functions of the remote controlling apparatus 200. For example, a channel adjustment portion may be set on the right side of the touch input unit 234, a volume adjustment portion set on the left, and a plurality of touch portions mapped with different functions such as menu portion may be set on the upper portion of the touch input unit 234. However, the arrangement of each input portion of the touch input unit 234 is not limited thereto. For example, the channel adjustment portion may be set on the left portion of the touch input unit 234, the volume adjustment portion may be set on the right portion thereof, or the menu portion may be set on the lower portion thereof. Further, the portions of the touch input unit 234 may be customized by a user to correspond to functions that the user desires.

The power button unit 235 may be arranged on an upper rear portion of the remote controlling apparatus 200, which gives relatively less accessibility to the fingers than the other button units. Accordingly, the power button unit 235 is arranged in the manner explained above to minimize an accident where the power button unit 235 is accidently pressed during operation of the remote controlling apparatus 200, turning off the remote controlling apparatus 200.

Although an example where a user manipulates the remote controlling apparatus 200 with all of his or her five fingers, this should not be construed as limiting. Accordingly, the user may manipulate the respective button units of the remote controlling apparatus 200 using the finger(s) he or she considers most appropriate.

FIG. 11 is a view provided to explain a form of operating the remote controlling apparatus according to various embodiments.

Referring to FIG. 11A, the user may select the pointing mode by releasing the pressed state of the mode change button unit 231. When the remote controlling apparatus 200 is in the pointing mode, the UI screen provided through the display apparatus 100 may display a pointer in a pointing form as illustrated.

Referring to FIG. 11B, the user may select the gesture mode by gripping, thus maintaining the mode change button unit 231 in pressed state. When the remote controlling apparatus 200 is in the gesture mode, the UI screen provided through the display apparatus 100 may display a pointer in a palm shape as illustrated.

Accordingly, through the UI screen, flicking or zoom-in/out manipulation may be inputted by gesturing with the remote controlling apparatus. For example, a flicking to change the display UI screen to another UI screen, a flicking to display new menu screen, or zoom-in/out to perform zoom-in/out with respect to displayed content, may be implemented.

As explained above, the remote controlling apparatus 200 may operate basically in the pointing mode, and changed to the gesture mode in response to a grip manipulation in which the pressing on the mode change button unit 231 is maintained.

Referring to FIG. 11C, the user may perform panning operation by maintaining pressing on the mode change button unit 231 and the select button unit 232. In this example, the UI screen provided through the display apparatus 100 may display a pointer in grip shape as illustrated. For example, if the remote controlling apparatus 200 is moved to a specific direction, the content image displayed on the screen in enlargement may be moved and displayed. That is, if the remote controlling apparatus 200 is moved up, down, left and right in a state that the specific content is selected, the displayed content image may move to the direction where the remote controlling apparatus 200 is moved. This grip type pointer provides the user with intuitive feeling as if he or she is actually holding and moving the content itself.

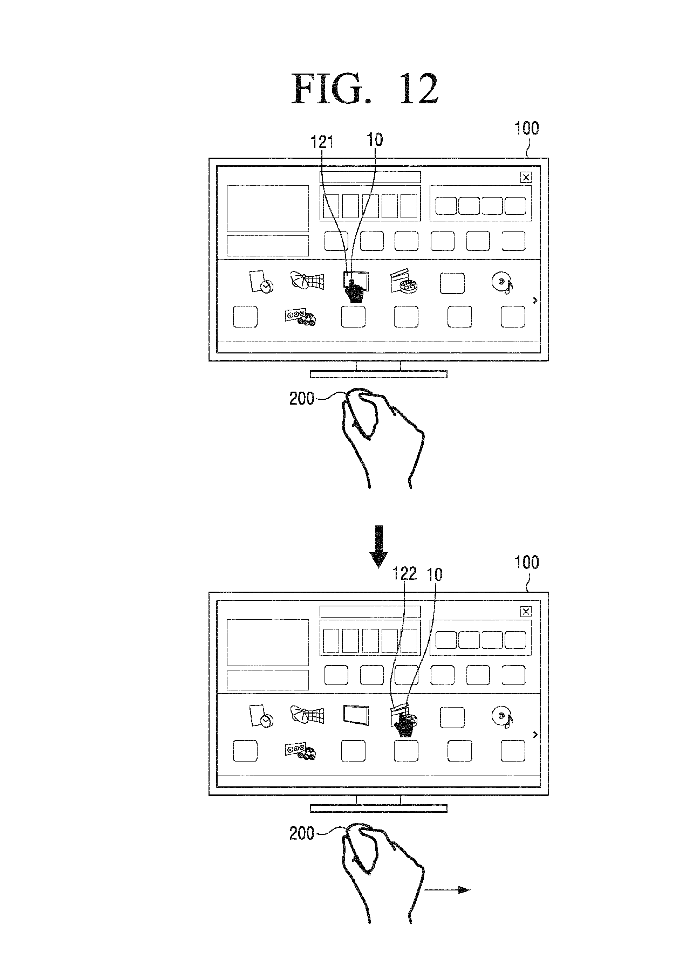

FIG. 12 is a view provided to explain an operational status in the pointing mode according to an embodiment.

Referring to FIG. 12, with the remote controlling apparatus 200 in the pointing mode, the display apparatus 100 may display a GUI corresponding to the pointing mode. That is, a hand-shaped pointing pointer 10 may be displayed on the screen.

In a state that the pointing pointer 10 is located on content A 121, as the user moves the remote controlling apparatus 200 to the right, the pointing pointer 10 on the screen may move to content B 122 on the right side of the content A 121.

That is, the pointing pointer 10 on the screen may move in accordance with the direction and distance of the movement made by the remote controlling apparatus 200, and moveable based on the absolute coordinate system. As used herein, the 'absolute coordinate system' refers to a way the pointer moves on the absolute coordinate area, and is distinct from a relative coordinate system in which the pointer moves relative to a previous location of the pointer, because the pointer on the screen moves with reference to a preset reference point according to the absolute coordinate system.

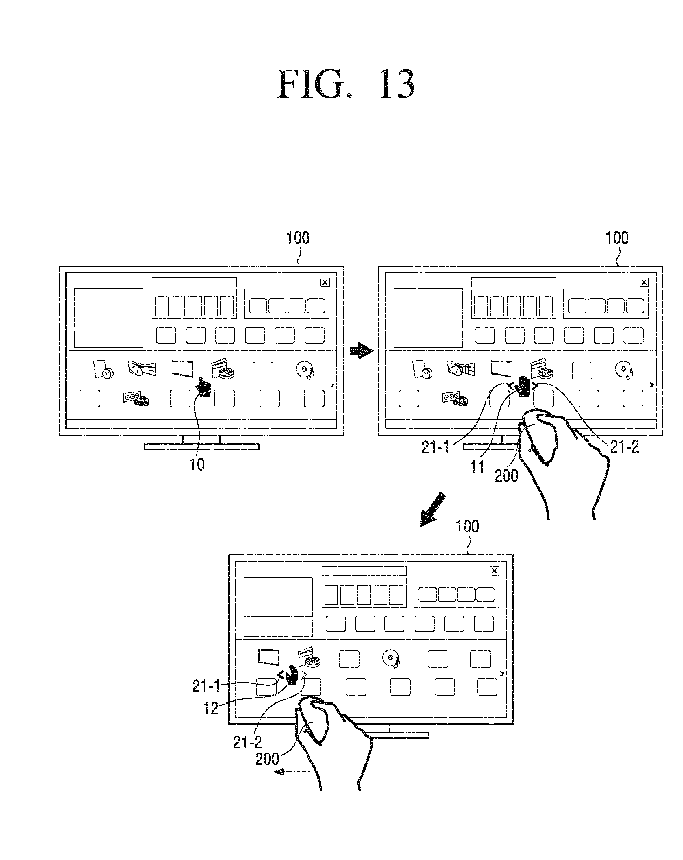

FIG. 13 is a view provided to explain an operational status according to mode change, according to an embodiment.

Referring to the upper-left illustration of FIG. 13, when the remote controlling apparatus 200 is in the pointing mode, the hand-shaped pointing pointer 10, indicating the current mode as the pointing mode, may be displayed on the screen of the display apparatus 100.

Then as the remote controlling apparatus 200 is changed to the gesture mode, the pointing pointer 10 is changed into a palm-shaped pointer 11, indicating the current mode as the gesture mode, and displayed. A guide GUI 21-1, 21-2 to guide a direction of inputting gesture may be displayed. For example, if there are new UI pages listed on the left and right sides, the guide GUI 21-1, 21-2 in the form of arrows pointing to left and right sides may be displayed, indicating the left- or right-ward flicking gesture is available.

Further, if the remote controlling apparatus 200 is moved to the left side, the palm-shaped pointer 11 may be changed into a pointer 12 with varied angle to represent a user's hand making left-ward flicking gesture. The guide GUI 21-1 to guide the information on the left side may be displayed in highlighting. That is, if the flicking is to be made on a representation of a touch screen, as the angle of the user's hand varies, the pointer may be changed in the similar manner and displayed. As a result, the user has the intuitive feeling as if he or she is actually making a flicking manipulation on the touch screen.

The direction the UI screen moves on the screen may be controlled according to the direction where the remote controlling apparatus 200 is moved. For example, if the remote controlling apparatus 200 is moved to the left as illustrated, the contents displayed on the center may be moved to the left side and displayed, while hidden contents on the right side may now appear.

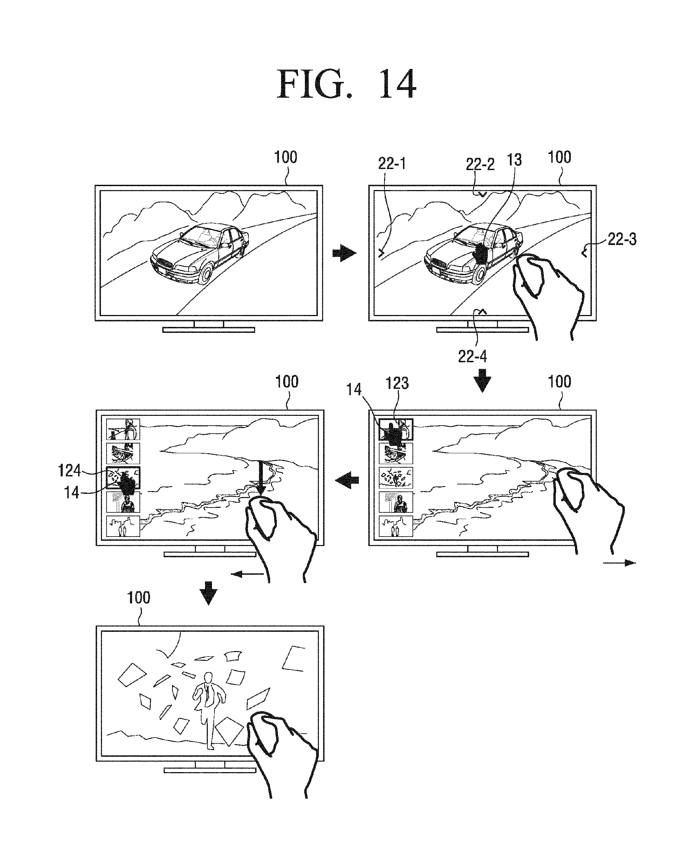

FIG. 14 is a view provided to explain an operational status in the gesture mode according to an embodiment.

Referring to FIG. 14, in a state that a specific content is displayed on the screen, if a user presses the mode change button (e.g., the mode change button unit 231 of FIG. 4B) provided on the remote controlling apparatus 200, the remote controlling apparatus 200 operates in the gesture mode and the guide GUI 22-1 to 22-4, indicating availability of gesture input, is displayed.

Then as the user moves the remote controlling apparatus 200 to a specific direction, while maintaining pressing on the mode change button 231, a preset menu corresponding to the direction of the movement may be displayed. For example, as illustrated, if the user moves the remote controlling apparatus 200 to the right direction, the content list on the left area may be displayed.

Further, if the user releases pressing on the mode change button, the remote controlling apparatus 200 operates in the pointing mode. In this case, the pointing pointer 14 may be moved in accordance with the movement of the remote controlling apparatus 200. For example, if the user moves the remote controlling apparatus 200 downwardly in a state that the pointing pointer 14 as illustrated is located on the specific content C 123, the pointing pointer 14 may move to the content D 124 located therebelow according to a distance the pointing pointer 14 is moved.

After that, in a state that the pointing pointer 14 is placed on the content D 124, if the user presses the select button on the remote controlling apparatus 200, the selected content D 124 is executed and displayed on the screen.

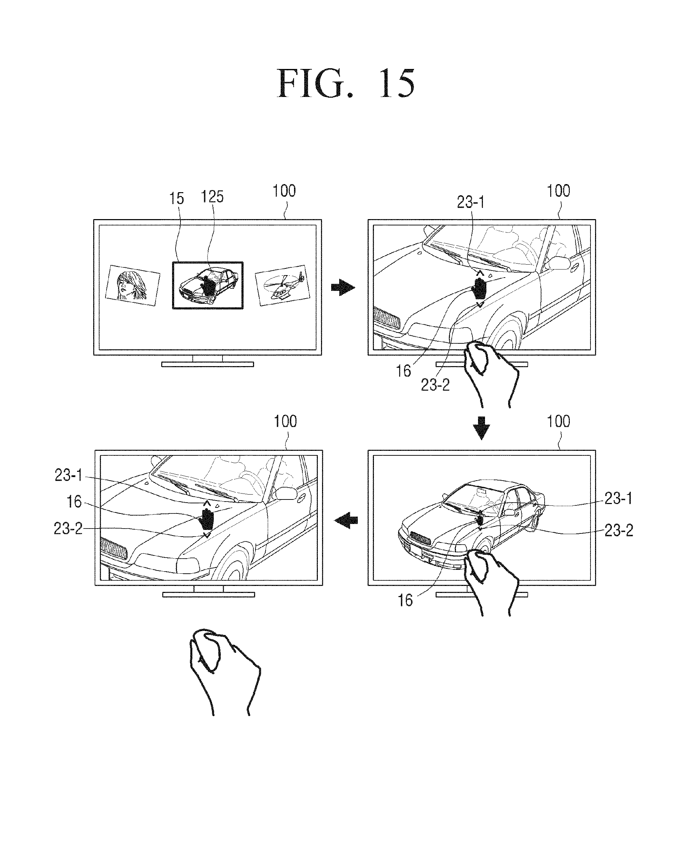

FIG. 15 is a view provided to explain an operational status in the gesture mode according to another embodiment.

Referring to FIG. 15, in a state that the pointing pointer 15 is located on the content E 125 in the pointing mode, if the user presses the select button (e.g., the select button unit 232 of FIG. 9B) formed on the remote controlling apparatus 200, the selected content E 125 is displayed on the screen of the display apparatus 100.

Then as the user presses the mode change button (e.g., the mode change button unit 231 of FIG. 9B) formed on the remote controlling apparatus 200, the pointing pointer 15 on the screen is changed into a palm-shaped pointer 16 to indicate the gesture mode, with which the guide GUI 23-1, 23-2 may be displayed to guide the fact that the gesture input is available.

Further, if the user moves the remote controlling apparatus 200 away from the user or moves closer to the display apparatus 100 while continuously pressing the mode change button, the currently-displayed content may be zoomed out and displayed accordingly.

Further, if the user moves the remote controlling apparatus 200 closer to the user or moves away from the display apparatus 100) while continuously pressing the mode change button, the currently displayed content on the screen may be zoomed in and displayed accordingly. In addition, the remote controlling apparatus may be configured so that the currently displayed content may be zoomed out and displayed when the user moves the remote controlling apparatus 200 closer to the user or away from the display apparatus 100, or zoomed in and displayed when the user moves the remote controlling apparatus 200 away from the user or closer to the display apparatus 100. Still further, the zoom in and out functions may be performed in accordance with the user rotating the remote controlling apparatus 200 clockwise or counterclockwise.

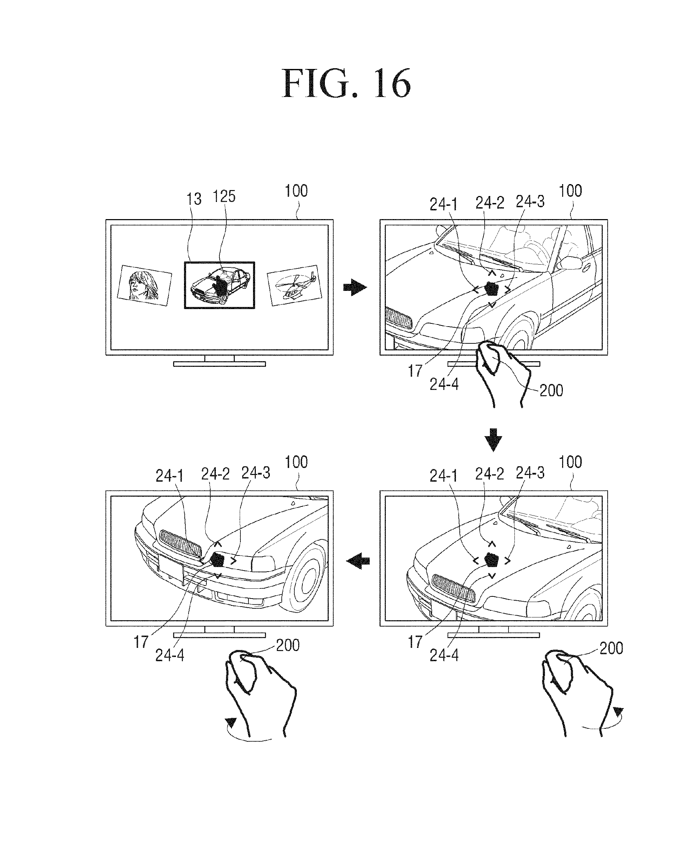

FIG. 16 is a view provided to explain an operational status in the gesture mode according to another embodiment.

Referring to FIG. 16, in a state that the pointing pointer 15 is located on the content E 125 in the pointing mode, if the user presses the select button (e.g., the select button unit 232 of FIG. 9B) formed on the remote controlling apparatus 200, the selected content E 125 is displayed on the screen of the display apparatus 100.

Then as the user presses the mode change button (e.g., the mode change button unit 231 of FIG. 4B) and maintains pressing the select button, the pointing pointer 15 is changed to a grip-type pointer 17 indicating availability of panning, with which the guide GUI 24-1, 24-2 may be displayed to guide the fact that the gesture input is available.

Further, if the user presses the mode change button and the select button and moves the remote controlling apparatus 200 up, down, left and right directions, the panning operation is performed with respect to the content displayed on the screen. For example, if the user presses the mode change button and the select button, and moves the remote controlling apparatus 200 to the right direction, the content displayed on the screen may also move to the right direction and displayed accordingly. The panning operation may be performed when the user moves the remote controlling apparatus 200 diagonally, for example, upper left, upper right, lower left, or lower right directions. In this case, additional guide GUI (not shown) corresponding to the diagonal directions may be shown on the screen.

In the above embodiments, although the panning operation is performed in a state that the user presses both the mode change button and the select button, this is only written for illustrative purpose. Accordingly, panning operation may be implemented when the select button is continuously pressed, while there was no pressing on the mode change button. For example, the pointing mode and the gesture mode may be changed to one another by pressing and releasing the mode change button unit 231, for example, in one clicking motion, clicking a plurality of times consecutively, or pressing and holding the mode change button unit 232 for a predetermined time and then releasing, so that the user doesn't have to continue pressing down the mode change button 231 to be in the gesture mode.

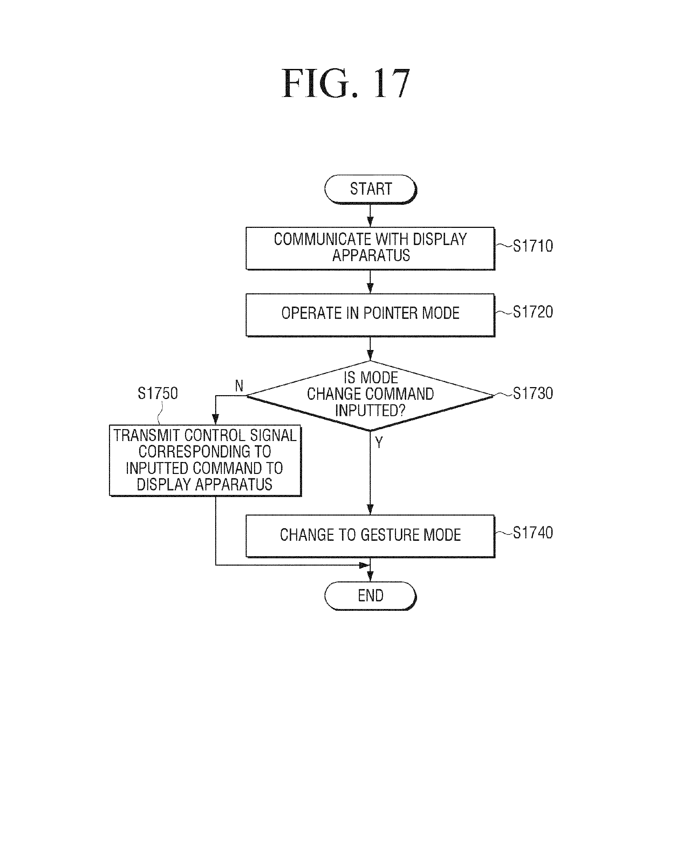

FIG. 17 is a flowchart provided to explain a control method of a remote controlling apparatus according to an embodiment.

Referring to FIG. 17, at S1710, the remote controlling apparatus 200 performs communication with the display apparatus 100. For example, if the remote controlling apparatus 200 and the display apparatus 100 communicate with each other based on the Bluetooth communication, upon power-on, the remote controlling apparatus 200 may search the display apparatus 100 and perform pairing with the display apparatus 100.

If no specific operation is inputted after the pairing with the display apparatus 100, at S1720, the remote controlling apparatus 200 operates in the pointing mode. In the pointing mode, the remote controlling apparatus 200 may control the moving status of the pointer on the screen of the display apparatus 100 according to the movement status of the remote controlling apparatus 200.

At S1730, if a mode change command is inputted, at S1740, the remote controlling apparatus 200 is changed to the gesture mode.

In the gesture mode, the remote controlling apparatus 200 may control the display status of the screen of the display apparatus 100 according to the movement status thereof. For example, a screen change may be made so that a menu screen may be displayed, or another UI screen may be displayed.

Meanwhile, at S1730, if a user command other than mode change command is inputted, at S1650, the remote controlling apparatus 200 may transmit a control signal corresponding to the inputted command to the display apparatus 100. For example, if a command to select the content, or command to move the pointer is inputted, the control signal corresponding to the inputted command may be transmitted to the display apparatus 100.

As explained above with reference to various embodiments, more intuitive remote controlling is provided to the user.

The methods according to various embodiments may be implemented in a conventional display apparatus or user terminal after simple software upgrade.

Further, a non-transitory computer readable medium recording therein a program to sequentially performing the control method according to an embodiment is provided.

Unlike the medium such as register, cache, or memory that stores data for a short period of time, the non-transitory computer readable medium refers to a medium that stores data semi-permanently and is readable by a device. For example, the various applications or programs explained above may be stored and provided on a non-transitory computer readable medium such as CD, DVD, hard disk, bluray disk, USB, memory card, or ROM.

Further, although a bus is not illustrated in the drawings accompanied hereto to illustrate a display apparatus and a remote controlling apparatus according to embodiments, communication among the components of the display apparatus and the remote controlling apparatus are implementable through the bus. Further, each device may additionally include a processor such as a CPU or microprocessor to perform various steps.

The foregoing embodiments and advantages are merely exemplary and are not to be construed as limiting the present invention. The present invention may be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A remote controlling apparatus to provide a plurality of control modes, the remote controlling apparatus comprising:
a communicating unit which performs communication with an external display apparatus which provides a user interface screen;
a detecting unit which detects a movement of the remote controlling apparatus;
a mode change button unit which is arranged on a rear surface of the remote controlling apparatus for a user to grip, and receives a user command to change a control mode; and
a control unit which controls a display status of the user interface screen according to the detected movement of the remote controlling apparatus, and which operates in a pointing mode if the mode change button unit is released from pressed state, or operates in a gesture mode while the mode change button unit is in pressed state.

2. The remote controlling apparatus of claim 1, wherein the pointing mode is to control a moving status of a pointer displayed on the user interface screen according to the movement status of the remote controlling apparatus as detected through the detecting unit, and
the gesture mode is to control the display status of the user interface screen according to a preset gesture of the remote controlling apparatus.

3. The remote controlling apparatus of claim 2, further comprising a select button unit which receives a user command to select an object on which the pointer is located in the pointing mode, wherein the select button unit is arranged on a front surface of the remote controlling apparatus.

4. The remote controlling apparatus of claim 3, further comprising a direction button unit arranged on an outer boundary of the select button unit, wherein the direction button unit is implemented in a form that contains at least one of a touch sensor and an optical joystick utilizing optical technology.

5. The remote controlling apparatus according to any one of claims 1 to 4, further comprising a touch input unit which includes a plurality of touch areas mapped with different functions, wherein
the touch input unit is arranged on a front surface of the remote controlling apparatus.

6. The remote controlling apparatus of claim 5, wherein the different functions mapped with the plurality of touch areas comprise at least one of a channel change function, a volume adjustment function, and a menu function.

7. The remote controlling apparatus of claim according to any one of claims 1 to 6, wherein the detecting unit comprises at least one of an accelerometer, a gyro sensor, and a terrestrial magnetism sensor.

8. The remote controlling apparatus according to any one of claims 1 to 7, wherein the communicating unit comprises a radio frequency (RF) communication module.

9. The remote controlling apparatus according to any one of claims 1 to 8, wherein a rear surface of the remote controlling apparatus, on which the mode change button unit is arranged, is rounded concavely.

10. The remote controlling apparatus of claim 9, wherein the mode change button unit is arranged continuously on a rear surface and both side surfaces of the remote controlling apparatus, and
the both side surfaces of the remote controlling apparatus are rounded concavely in continuation with the rear surface.

11. The remote controlling apparatus of claim according to any one of claims 1 to 10, comprising a plurality of the mode change button units.

12. The remote controlling apparatus of claim 3, wherein the front surface of the remote controlling apparatus, is so formed as to be rounded to be gradually inclined downwardly from an upper portion, where the select button is arranged, toward a rear side.

13. A control method of a remote controlling apparatus for providing a plurality of control modes, the control method comprising:
operating in a pointing mode according to a moving status of the remote controlling apparatus, in which the pointing mode is to control a moving status of a pointer displayed on a user interface screen provided from an external display apparatus;
detecting a pressed state of a mode change button unit which receives a user command to change a control mode; and
operating in a gesture mode while the mode change button unit is in the pressed state, to control the display status of the user interface screen,
wherein the mode change button unit is arranged on a rear surface of the remote controlling apparatus for a user to grip.

14. The control method of claim 13, further comprising:
detecting the pressed state of a select button unit which receives a user command to select an object on which the pointer is located in the pointing mode, and
if the select button unit is detected as being in the pressed state, transmitting a control signal to execute the object on which the pointer is placed, to the display apparatus.
